# EUROPEAN PATENT APPLICATION

(11) **EP 4 274 255 A1**
(43) Date of publication of application: **08.11.2023**
(21) Application number: 23168439.0
(22) Date of filing: 18.04.2023
(51) Int. Cl.: H04R 1/40, G01S 3/808

(54) **APPARATUS, METHODS AND COMPUTER PROGRAMS FOR ADAPTING AUDIO PROCESSING**

(30) Priority: 06.05.2022 GB 202206674
(71) Applicant: Nokia Technologies Oy, 02610 Espoo (FI)
(72) Inventor: HEIKKINEN, Mikko Olavi, Tampere (FI)
(74) Representative: Nokia EPO representatives

(57) **Abstract**

An apparatus comprising means configured to: determine at least one parameter in relation to microphone acoustics of the apparatus; obtain a machine learning model, wherein the machine learning model is trained with generated input data at least based on the at least one parameter; and process at least one audio signal in relation to the microphone acoustics using the obtained machine learning model.

## Description

### Field

The present application relates to apparatus and methods for apparatus, methods and computer programs for adapting audio processing, but not exclusively for apparatus, methods and computer programs for adapting audio processing with a parameter model in mobile or portable apparatus.

### Background

Spatial audio capture with microphone arrays is utilized in many modern digital devices such as mobile devices and cameras, in many cases together with video capture. Spatial audio capture can be played back with headphones or loudspeakers to provide the user with an experience of the audio scene captured by the microphone arrays.

Parametric spatial audio capture methods enable spatial audio capture with diverse microphone configurations and arrangements, thus can be employed in consumer devices, such as mobile phones. Parametric spatial audio capture methods are based on signal processing solutions for analysing the spatial audio field around the device utilizing available information from multiple microphones. Typically, these methods perceptually analyse the microphone audio signals to determine relevant information in frequency bands. This information includes for example direction of a dominant sound source (or audio source or audio object) and a relation of a source energy to overall band energy. Based on this determined information the spatial audio can be reproduced, for example using headphones or loudspeakers. Ultimately the user or listener can thus experience the environment audio as if they were present in the audio scene within which the capture devices were recording.

The better the audio analysis and tracking the more realistic is the outcome experienced by the user or listener.

### Summary

There is provided according to a first aspect an apparatus comprising means configured to: determine at least one parameter in relation to microphone acoustics of the apparatus; obtain a machine learning model, wherein the machine learning model is trained with generated input data at least based on the at least one parameter; and process at least one audio signal in relation to the microphone acoustics using the obtained machine learning model.

The means configured to determine at least one parameter in relation to microphone acoustics of the apparatus may be configured to: passively obtain the at least one parameter from at least two microphones located on the apparatus at least two audio signals; and determine the at least one parameter in relation to microphone acoustics of the apparatus based on processing the at least two audio signals.

The means configured to determine at least one parameter in relation to microphone acoustics of the apparatus based on processing the at least two audio signals may be configured to determine at least one of: at least one microphone location with respect to a locus on the apparatus; at least one dimension of the apparatus; a geometry of the apparatus; at least one microphone orientation with respect to the apparatus; and at least one material acoustic property of the apparatus.

The means configured to determine the at least one parameter in relation to microphone acoustics of the apparatus based on processing the at least two audio signals may be configured to: determine distance estimates between pairs of the at least two microphones; and determine microphone location estimates based on the determined distance estimates between pairs of the at least two microphones.

The means configured to determine the at least one parameter in relation to microphone acoustics of the apparatus based on processing the at least two audio signals may be further configured to: determine at least one sound source and a direction associated with the at least one sound source; and determine based on microphone audio signal spectrum difference at least one at least one acoustic characteristic parameter associated with the apparatus.

The means configured to obtain a machine learning model, wherein the machine learning model is trained with generated input data at least based on the at least one parameter may be configured to: simulate a training dataset based on the at least one parameter of the apparatus; and train the machine learning model with the training dataset.

The means configured to obtain a machine learning model, wherein the machine learning model is trained with generated input data at least based on the at least one parameter may be configured to: output the at least one parameter in relation to microphone acoustics of the apparatus to a further apparatus, wherein the further apparatus is configured to simulate a training dataset based on the at least one parameter in relation to microphone acoustics of the apparatus and apply the training dataset to the machine learning model; and receive from the further apparatus a machine learning model output.

The means configured to process at least one audio signal in relation to the microphone acoustics using the obtained machine learning model may be configured to determine at least one of: at least one sound source direction by processing at least one audio signal captured by the apparatus using the machine learning model; at least one sound source location by processing at least one audio signal captured by the apparatus using the machine learning model; at least one tracked sound source direction by processing at least one audio signal captured by the apparatus using the machine learning model; and at least one tracked sound source position by processing at least one audio signal captured by the apparatus using the machine learning model.

The means may be further configured to process at least one audio signal captured by the apparatus based on the at least one parameter of the apparatus while waiting for the machine learning model.

According to a second aspect there is provided an apparatus comprising means configured to: obtain at least one parameter in relation to microphone acoustics of a further apparatus; obtain a machine learning model wherein the machine learning model is trained with generated input data at least based on the at least one parameter; and output the determined machine learning model to the further apparatus to process at least one audio signal in relation to the microphone acoustics using the obtained machine learning model.

The at least one parameter in relation to microphone acoustics of a further apparatus may be at least one of: at least one microphone location with respect to a locus on the further apparatus; at least one dimension of the further apparatus; a geometry of the further apparatus; at least one microphone orientation with respect to the further apparatus; and at least one material acoustic property of the further apparatus.

The means configured to obtain the machine learning model wherein the machine learning model is trained with generated input data at least based on the at least one parameter may be configured to: simulate a training dataset based on the at least one parameter in relation to microphone acoustics of the further apparatus; and generate the machine learning model based on the training dataset.

According to a third aspect there is provided a method for an apparatus, the method comprising: determining at least one parameter in relation to microphone acoustics of the apparatus; obtaining a machine learning model, wherein the machine learning model is trained with generated input data at least based on the at least one parameter; and processing at least one audio signal in relation to the microphone acoustics using the obtained machine learning model.

Determining at least one parameter in relation to microphone acoustics of the apparatus may comprise: passively obtaining the at least one parameter from at least two microphones located on the apparatus at least two audio signals; and determining the at least one parameter in relation to microphone acoustics of the apparatus based on processing the at least two audio signals.

Determining at least one parameter in relation to microphone acoustics of the apparatus based on processing the at least two audio signals may comprise determining at least one of: at least one microphone location with respect to a locus on the apparatus; at least one dimension of the apparatus; a geometry of the apparatus; at least one microphone orientation with respect to the apparatus; and at least one material acoustic property of the apparatus.

Determining the at least one parameter in relation to microphone acoustics of the apparatus based on processing the at least two audio signals may comprise: determining distance estimates between pairs of the at least two microphones; and determining microphone location estimates based on the determined distance estimates between pairs of the at least two microphones.

Determining the at least one parameter in relation to microphone acoustics of the apparatus based on processing the at least two audio signals may further comprise: determining at least one sound source and a direction associated with the at least one sound source; and determining based on microphone audio signal spectrum difference at least one at least one acoustic characteristic parameter associated with the apparatus.

Obtaining a machine learning model, wherein the machine learning model is trained with generated input data at least based on the at least one parameter may comprise: simulating a training dataset based on the at least one parameter of the apparatus; and training the machine learning model with the training dataset.

Obtaining a machine learning model, wherein the machine learning model is trained with generated input data at least based on the at least one parameter may comprise: outputting the at least one parameter in relation to microphone acoustics of the apparatus to a further apparatus, wherein the further apparatus is configured to simulate a training dataset based on the at least one parameter in relation to microphone acoustics of the apparatus and apply the training dataset to the machine learning model; and receiving from the further apparatus a machine learning model output.

Processing at least one audio signal in relation to the microphone acoustics using the obtained machine learning model may comprise determining at least one of: at least one sound source direction by processing at least one audio signal captured by the apparatus using the machine learning model; at least one sound source location by processing at least one audio signal captured by the apparatus using the machine learning model; at least one tracked sound source direction by processing at least one audio signal captured by the apparatus using the machine learning model; and at least one tracked sound source position by processing at least one audio signal captured by the apparatus using the machine learning model.

The method may further comprise processing at least one audio signal captured by the apparatus based on the at least one parameter of the apparatus while waiting for the machine learning model.

According to a fourth aspect there is provided a method for an apparatus, the method comprising: obtaining at least one parameter in relation to microphone acoustics of a further apparatus; obtaining a machine learning model wherein the machine learning model is trained with generated input data at least based on the at least one parameter; and outputting the determined machine learning model to the further apparatus wherein the further apparatus is configured to process at least one audio signal in relation to the microphone acoustics using the obtained machine learning model.

The at least one parameter in relation to microphone acoustics of a further apparatus may be at least one of: at least one microphone location with respect to a locus on the further apparatus; at least one dimension of the further apparatus; a geometry of the further apparatus; at least one microphone orientation with respect to the further apparatus; and at least one material acoustic property of the further apparatus.

Determining the machine learning model wherein the machine learning model is trained with generated input data at least based on the at least one parameter may comprise: simulating a training dataset based on the at least one parameter in relation to microphone acoustics of the further apparatus; and generating the machine learning model based on the training dataset.

According to a fifth aspect there is provided an apparatus comprising at least one processor and at least one memory including a computer program code, the at least one memory and the computer program code configured to, with the at least one processor, cause the apparatus at least to: determine at least one parameter in relation to microphone acoustics of the apparatus; obtain a machine learning model, wherein the machine learning model is trained with generated input data at least based on the at least one parameter; and process at least one audio signal in relation to the microphone acoustics using the obtained machine learning model.

The apparatus caused to determine at least one parameter in relation to microphone acoustics of the apparatus may be caused to: passively obtain the at least one parameter from at least two microphones located on the apparatus at least two audio signals; and determine the at least one parameter in relation to microphone acoustics of the apparatus based on processing the at least two audio signals.

The apparatus caused to determine at least one parameter in relation to microphone acoustics of the apparatus based on processing the at least two audio signals may be caused to determine at least one of: at least one microphone location with respect to a locus on the apparatus; at least one dimension of the apparatus; a geometry of the apparatus; at least one microphone orientation with respect to the apparatus; and at least one material acoustic property of the apparatus.

The apparatus caused to determine the at least one parameter in relation to microphone acoustics of the apparatus based on processing the at least two audio signals may be caused to: determine distance estimates between pairs of the at least two microphones; and determine microphone location estimates based on the determined distance estimates between pairs of the at least two microphones.

The apparatus caused to determine the at least one parameter in relation to microphone acoustics of the apparatus based on processing the at least two audio signals may be further caused to: determine at least one sound source and a direction associated with the at least one sound source; and determine based on microphone audio signal spectrum difference at least one at least one acoustic characteristic parameter associated with the apparatus.

The apparatus caused to obtain a machine learning model, wherein the machine learning model is trained with generated input data at least based on the at least one parameter may be caused to: simulate a training dataset based on the at least one parameter of the apparatus; and train the machine learning model with the training dataset.

The apparatus caused to obtain a machine learning model, wherein the machine learning model is trained with generated input data at least based on the at least one parameter may be caused to: output the at least one parameter in relation to microphone acoustics of the apparatus to a further apparatus, wherein the further apparatus may be configured to simulate a training dataset based on the at least one parameter in relation to microphone acoustics of the apparatus and apply the training dataset to the machine learning model; and receive from the further apparatus a machine learning model output.

The apparatus caused to process at least one audio signal in relation to the microphone acoustics using the obtained machine learning model may be caused to determine at least one of: at least one sound source direction by processing at least one audio signal captured by the apparatus using the machine learning model; at least one sound source location by processing at least one audio signal captured by the apparatus using the machine learning model; at least one tracked sound source direction by processing at least one audio signal captured by the apparatus using the machine learning model; and at least one tracked sound source position by processing at least one audio signal captured by the apparatus using the machine learning model.

The apparatus may be further caused to process at least one audio signal captured by the apparatus based on the at least one parameter of the apparatus while waiting for the machine learning model.

According to a sixth aspect there is provided an apparatus comprising at least one processor and at least one memory including a computer program code, the at least one memory and the computer program code configured to, with the at least one processor, cause the apparatus at least to: obtain at least one parameter in relation to microphone acoustics of a further apparatus; obtain a machine learning model wherein the machine learning model is trained with generated input data at least based on the at least one parameter; and output the determined machine learning model to the further apparatus to process at least one audio signal in relation to the microphone acoustics using the obtained machine learning model.

The at least one parameter in relation to microphone acoustics of a further apparatus may be at least one of: at least one microphone location with respect to a locus on the further apparatus; at least one dimension of the further apparatus; a geometry of the further apparatus; at least one microphone orientation with respect to the further apparatus; and at least one material acoustic property of the further apparatus.

The apparatus caused to obtain the machine learning model wherein the machine learning model is trained with generated input data at least based on the at least one parameter may be caused to: simulate a training dataset based on the at least one parameter in relation to microphone acoustics of the further apparatus; and generate the machine learning model based on the training dataset. According to a seventh aspect there is provided an apparatus comprising: determining circuitry configured to determine at least one parameter in relation to microphone acoustics of the apparatus; obtaining circuitry configured to obtain a machine learning model, wherein the machine learning model is trained with generated input data at least based on the at least one parameter; and processing circuitry configured to process at least one audio signal in relation to the microphone acoustics using the obtained machine learning model.

According to an eighth aspect there is provided an apparatus comprising: obtaining circuitry configured to obtain at least one parameter in relation to microphone acoustics of a further apparatus; determining circuitry configured to obtain a machine learning model wherein the machine learning model is trained with generated input data at least based on the at least one parameter; and outputting circuitry configured to output the determined machine learning model to the further apparatus to process at least one audio signal in relation to the microphone acoustics using the obtained machine learning model.

According to a ninth aspect there is provided a computer program comprising instructions [or a computer readable medium comprising program instructions] for causing an apparatus to perform at least the following: determine at least one parameter in relation to microphone acoustics of the apparatus; obtain a machine learning model, wherein the machine learning model is trained with generated input data at least based on the at least one parameter; and process at least one audio signal in relation to the microphone acoustics using the obtained machine learning model.

According to a tenth aspect there is provided a computer program comprising instructions [or a computer readable medium comprising program instructions] for causing an apparatus to perform at least the following: obtain at least one parameter in relation to microphone acoustics of a further apparatus; obtain a machine learning model wherein the machine learning model is trained with generated input data at least based on the at least one parameter; and output the determined machine learning model to the further apparatus to process at least one audio signal in relation to the microphone acoustics using the obtained machine learning model.

According to an eleventh aspect there is provided a non-transitory computer readable medium comprising program instructions for causing an apparatus to perform at least the following: determine at least one parameter in relation to microphone acoustics of the apparatus; obtain a machine learning model, wherein the machine learning model is trained with generated input data at least based on the at least one parameter; and process at least one audio signal in relation to the microphone acoustics using the obtained machine learning model.

According to a twelfth aspect there is provided a non-transitory computer readable medium comprising program instructions for causing an apparatus to perform at least the following: obtain at least one parameter in relation to microphone acoustics of a further apparatus; obtain a machine learning model wherein the machine learning model is trained with generated input data at least based on the at least one parameter; and output the determined machine learning model to the further apparatus to process at least one audio signal in relation to the microphone acoustics using the obtained machine learning model.

According to a thirteenth aspect there is provided an apparatus comprising: means for determining at least one parameter in relation to microphone acoustics of the apparatus; means for obtaining a machine learning model, wherein the machine learning model is trained with generated input data at least based on the at least one parameter; and means for processing at least one audio signal in relation to the microphone acoustics using the obtained machine learning model.

According to a fourteenth aspect there is provided an apparatus comprising: means for obtaining at least one parameter in relation to microphone acoustics of a further apparatus; means for determining a machine learning model wherein the machine learning model is trained with generated input data at least based on the at least one parameter; and means for outputting the determined machine learning model to the further apparatus wherein the further apparatus is configured to process at least one audio signal in relation to the microphone acoustics using the obtained machine learning model.

According to a fifteenth aspect there is provided a computer readable medium comprising program instructions for causing an apparatus to perform at least the following: determine at least one parameter in relation to microphone acoustics of the apparatus; obtain a machine learning model, wherein the machine learning model is trained with generated input data at least based on the at least one parameter; and process at least one audio signal in relation to the microphone acoustics using the obtained machine learning model.

According to a sixteenth aspect there is provided a computer readable medium comprising program instructions for causing an apparatus to perform at least the following: obtain at least one parameter in relation to microphone acoustics of a further apparatus; obtain a machine learning model wherein the machine learning model is trained with generated input data at least based on the at least one parameter; and output the determined machine learning model to the further apparatus to process at least one audio signal in relation to the microphone acoustics using the obtained machine learning model.

An apparatus comprising means for performing the actions of the method as described above.

An apparatus configured to perform the actions of the method as described above.

A computer program comprising program instructions for causing a computer to perform the method as described above.

A computer program product stored on a medium may cause an apparatus to perform the method as described herein.

An electronic device may comprise apparatus as described herein.

A chipset may comprise apparatus as described herein.

Embodiments of the present application aim to address problems associated with the state of the art.

### Summary of the Figures

For a better understanding of the present application, reference will now be made by way of example to the accompanying drawings in which:
Figure 1 shows a schematic view of a spatial audio capture device suitable for implementing some embodiments;
Figure 2 shows a schematic view of a source direction determination and tracking apparatus according to some embodiments;
Figure 3 shows a flow diagram of the operation of the model based direction determination and tracking according to some embodiments;
Figure 4 shows schematically an example parametric model for a suitable capture device;
Figure 5 shows schematically a parametric model calibrator/generator in further detail according to some embodiments;
Figure 6 shows a flow diagram of the operation of the parametric model calibrator/generator as shown in Figure 5;
Figure 7 shows schematically a distributed parametric model calibrator/generator according to some embodiments;
Figure 8 shows a flow diagram of the operation of the distributed parametric model calibrator/generator as shown in Figure 7; and
Figure 9 shows an example device suitable for implementing the apparatus shown in previous figures.

### Embodiments of the Application

The following describes in further detail suitable apparatus and possible mechanisms for determining sound or audio source direction and tracking based on a parametric modelling of capture apparatus.

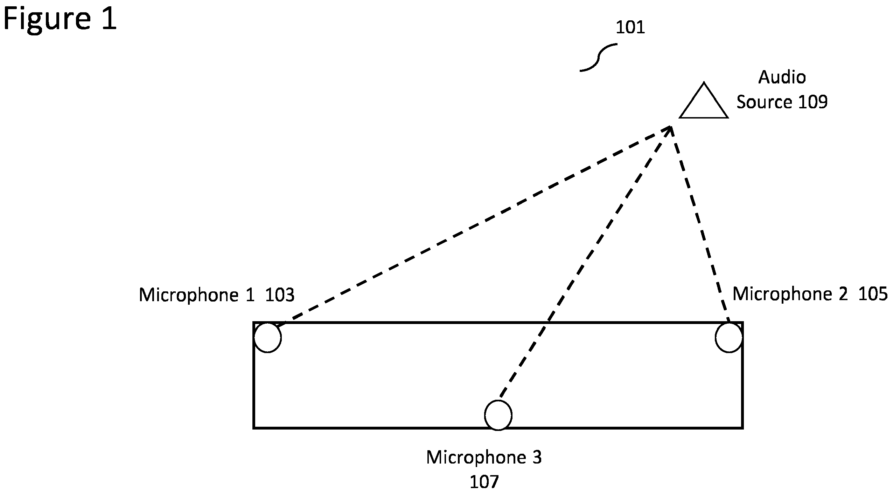

The concept of determining directions and tracking audio or sound sources is known. A simple example of which is shown with respect to Figure 1 wherein the capture device or apparatus 101 is shown. The capture device or apparatus 101 is shown with three microphones or microphone arrays with defined locations which are configured to receive acoustic waves from an audio (sound) source 109. The microphones, for example microphone 1 103, microphone 2 105 and microphone 3 107 are configured to generate audio signals which can be processed or analysed to determine time/amplitude differences and based on the known microphone positions determine audio source directions which can be tracked.

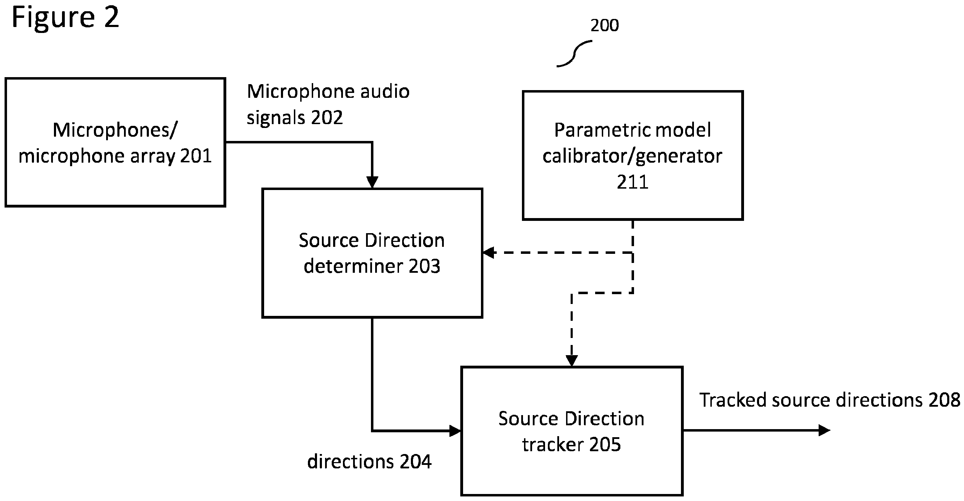

With respect to Figure 2 an example schematic view of the audio source direction/tracking apparatus 200 is shown. In this example is shown the microphones/microphone array 210 which is configured to generate microphone audio signals 202 which can be passed to the source direction determiner 203.

Furthermore the apparatus 200 is shown comprising a parametric model calibrator/generator 211 which is configured to determine the parametric model of the microphone locations and pass this model information to a source direction determiner 203 and the source direction tracker 205.

The apparatus 200 further comprises a source direction determiner 203 which is configured to process the microphone audio signals 202 based on the determined parametric model and generate source directions 204, which can be passed to the source direction tracker 205.

Additionally the apparatus 200 can further comprise a source direction tracker 205 which is configured to process the determined source directions 204 and track these directions to generate tracked source directions 208.

A current issue is how to employ a machine learning (ML) based solution to audio source tracking so that it is able to work well on all devices, e.g., deploy via app store so that it will work on all Android devices.

Thus there is a need to implement a modelling of device acoustic properties for any device without prior knowledge of the device and without specific actions required from the user. The modelling can then be adapted to enable a source tracking ML-algorithm for the device.

At the time of writing there are over 14000 different Android device models and a source direction estimation and tracking solution should be configured to be able to support more than only a select few models in order to not limit the size of the potential market. Furthermore the embodiments as discussed herein are configured to be implemented using an automated or semi-automated process in order to enable supporting a large proportion of devices.

In some embodiments machine learning (ML) algorithms can adjust to different hardware acoustics. The model structure can be consistent, but the model has to be trained with data that matches the devices. For acoustic or audio source tracking the training data is a large dataset of multimicrophone audio recordings captured with the target device or apparatus. The recordings can contain device-specific effects of the device microphone placement and acoustics that are caused by device shape and electronic components such as microphones. The training dataset in some embodiments also obtains or receives metadata that describes temporal placement of sound sources, which are used during training to provide the correct output that the training process tries to learn.

The training dataset should be very large, for example in the hundreds of hours of audio. However it can be practically impossible to gather this much recording data for each type mobile phone, if the target is to run the algorithm for all mobile phone models.

It is known to mitigate the problem of obtaining a large dataset of recordings by using simulations. This can be achieved by measuring and modelling the device in some way and then creating simulated recordings that can be used to train the model. However, measuring and modelling device acoustics can be a task that requires a significant expense of resources, expertise and specialized equipment, which is not something an end user is typically capable or willing to do.

A device manufacturer could provide any required measurements or modelling data to be used to create the simulated training dataset for a device. This could be achieved by publicly standardizing the modelling requirements and hoping that a manufacturer will use the modelling requirements to provide the model parameters for the device. However such approaches would slow down development (i.e., each change to requirements would require a new version of standard, which manufacturers would need to implement). Furthermore it is unlikely that manufacturers would implement and generate the model parameters without a clear advantage for them.

For some cases, it could be possible for the user to do some of the required measurement steps. However, many users would not have the technical ability to implement the measurement steps and user error may result in an incorrectly working application.

Measuring transfer function of device in an anechoic chamber with sine sweeps and noise bursts is well known. Methods also exist for measuring in presence of noise or room echo.

In some embodiments passive calibration of delays (i.e. distances) of microphones in an array requires no specific input or steps. The device is configured to record audio in the background and the calibration process will use this recorded audio.

The concept as discussed furthermore in the embodiments hereafter relates to multimicrophone algorithms and machine learning where there is provided apparatus and methods for determining device acoustic characteristics to achieve automatic calibration of the direction detection and tracking by employing model re-training with a parameter model that matches the determined device acoustic characteristics. The examples describe the obtaining, determining and capturing of machine learning models.

In some embodiments the apparatus and methods are configured to adapt to unknown device's geometry and acoustics. In some embodiments the apparatus and methods employ using passive calibration to find parameters of a model that describes the device's geometry and acoustics. In some embodiments the apparatus and method are configured to employ a parametric model with the calibrated parameters to produce a simulated training dataset from a dataset of audio material that has not been captured using the device (e.g. using any monophonic samples). Additionally in some embodiments the apparatus and methods are configured to re-train the algorithms with the simulated training dataset and furthermore deploys the re-trained algorithm to the device.

Thus the embodiments are configured such that the source direction determination and tracking apparatus and methods can be tuned to work on any device, which enables large potential market size. Additionally in some embodiments the apparatus and methods can be configured to employ a user friendly operation where there are no manual steps required from the user. The source direction determination and tracking apparatus and methods can furthermore be configured to be implemented on any device that has required number of microphones.

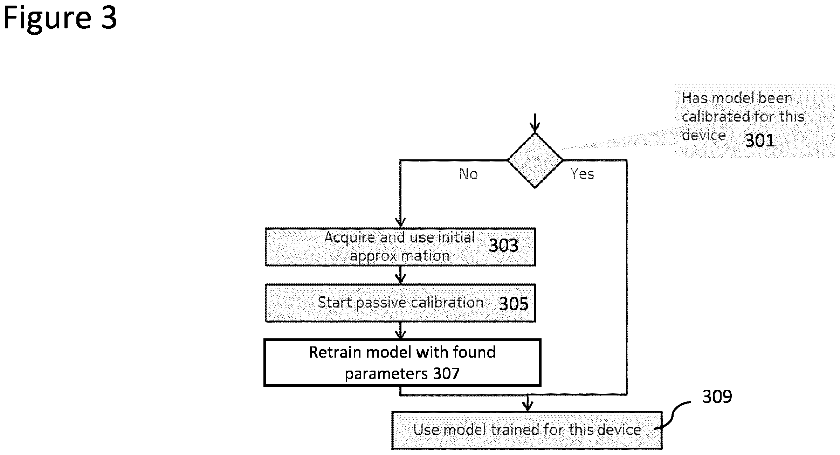

In some embodiments the parametric model calibrator/generator 211 can be configured to operate the following operations as shown in Figure 3.

In some embodiments the parametric model calibrator/generator 211 is configured to check whether the capture apparatus or device has already been calibrated and whether there is need to run the calibration. The check operation is shown in Figure 3 by step 301.

If there already exists a suitable trained parametric model that matches this configuration, it can be obtained, for example downloaded, and used as shown in Figure 3 by step 309.

If the device has not been calibrated, then in some embodiments an initial estimate of the device parametric model parameters is determined and this simple model that fits the device but is not optimal can be used as shown in Figure 3 by step 303.

The employment of the simple model allows a user of the device to start using the device right away. Later when the calibration is finished, the operation of the application will improve. The initial estimate can in some embodiments be selected from a group of predefined alternatives. For example in an Android system, there is an API that can provide coordinates of each microphone and that information can be used to generate the initial estimation.

The calibrations process can then be implemented as shown in Figure 3 by step 305. In some embodiments the apparatus is configured to start recording audio signals. Suitable parts of recorded audio can then be used as an input to the calibration process. In some embodiments the process is passive. In other words that it happens automatically in the background without need for actions from the user.

In some embodiments when the calibration process has gathered enough audio recordings and has been able to calculate parameter model values with higher (or significant) accuracy it will indicate that the device calibration is ready as shown in Figure 3 by step 307. The parameter model calibration can in some embodiments be implemented as an iterative process and slowly find the more optimal parameters. The input audio will have effect on the results and therefore it might be required to do many recordings.

When the model parameters are found a simulated training dataset is produced. This happens by processing a dataset of, e.g., monophonic samples with the device impulse responses to produce simulated audio scenarios. The process creates both audio output and metadata that describes the audio. The metadata is used in the training process later to steer the model training learning process.

In some embodiments the retraining step takes the simulated training dataset and uses it to train the parameter model. The training in some embodiments is configured to have a predefined ML-model topology with a predetermined training process. The training process is then configured to employ the new data produced with the parameter model to produce a newly trained model that is more optimal for the device under calibration.

When the ML-model re-training finishes the output can be a new ML-model binary. This ML-model binary can then be used by the source direction estimation and tracking applications. The source direction estimation and tracking application performance is now adjusted for the device and a better performance is achieved. The process required no actions from the user. In other words using the improved model as shown in Figure 3 by step 309.

As discussed earlier in some embodiments the calibration process can be an iterative process. In other words when one model has been trained and employed the calibration process need not stop and a further model can be trained. Thus new pieces of audio can be captured and employed to improve the model parameter fitting and the send new model parameters for re-training and this way improve the source direction estimation and tracking over time.

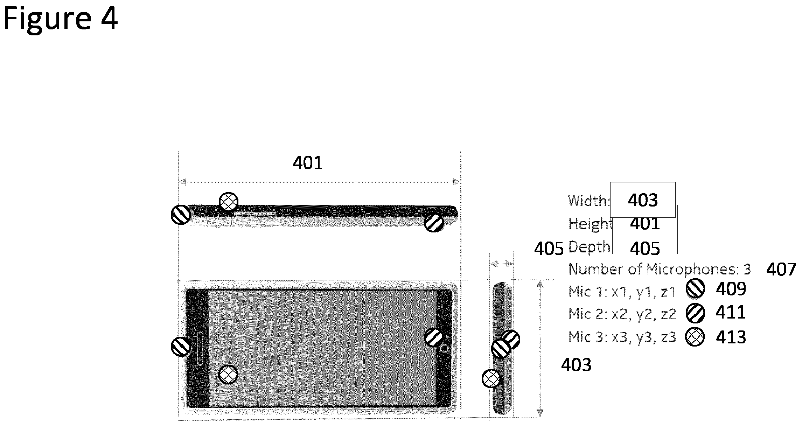

With respect to Figure 4 is shown shows an example of a parameter model. The example model defines a mobile-phone type device with a rectangular shape. The parameters defined by the model are dimensions of the device: height 401, depth 405, width 403. Furthermore the model can comprise other parameters such as number of microphones 407, and for each identified microphone the microphone location coordinates in 3D space centred to the device mid-point (or with respect to some other suitable device or apparatus locus). For example in the example model as shown in Figure 4 is shown a first microphone mic 1 position x1, y1, z1 409, second microphone mic 2 position x2, y2, z2 411, and third microphone mic 3 position x3, y3, z3 413.

In some embodiments a parameter model could be more detailed and describe the device shape in more detail. For example in some embodiments the parameter model is comprises parameters configured to model microphone inlets with more detail or the apparatus or device material properties that define sound absorption and reflection at the apparatus.

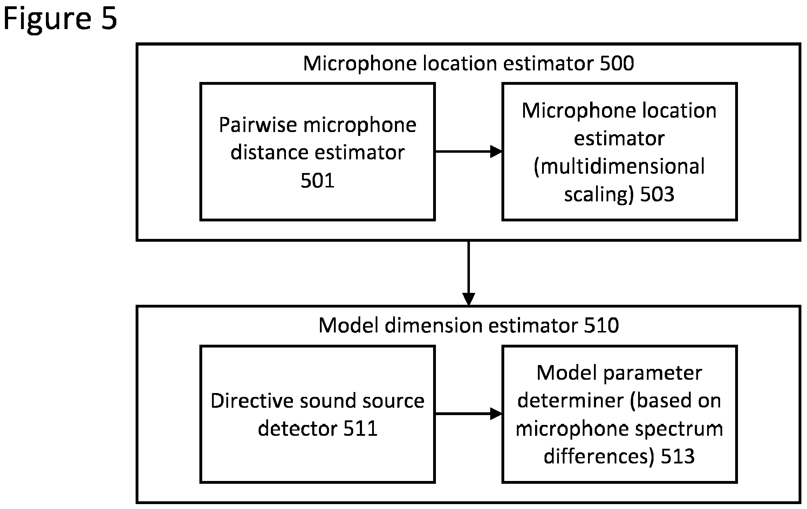

With respect to Figure 5 is shown a schematic view of a (passive) parametric model calibrator/generator 211 in further detail. The parametric model calibrator/generator 211 is configured to use acoustic measurements to find parameters that will produce a model that matches the characteristics of the device.

In some embodiments the parametric model calibrator/generator 211 comprises a microphone location estimator 500 configured to estimate the microphone locations and a model dimension (parameter) estimator 510 configured to obtain the microphone location estimator 500 output and generate the parameters related to the apparatus/device shape.

In some embodiments the microphone location estimator 500 comprises a pairwise microphone distance estimator 501. The pairwise microphone distance estimator 501 is configured to exploit the knowledge that the apparatus comprises synchronised apparatus microphones, in other words that the apparatus microphones are synchronized (i.e. using the same clock source or audio interface) and that their distances are relatively small. This enables the pairwise microphone distance estimator 501 determine the coherence of diffuse noise captured by the microphones. The noise coherence function can then be used to solve for the pairwise distances of the microphones.

The pairwise microphone distance estimator 501 can be configured to output the pairwise distances to a multidimensional scaling microphone location estimator 503.

In some embodiments the microphone location estimator 500 further comprises a multidimensional scaling microphone location estimator 503. The multidimensional scaling microphone location estimator 503 is configured to obtain the estimates of the pairwise distances and determine locations of the microphones in relation to each other by using any suitable mathematical optimization technique such as, for example, multidimensional scaling.

In other words although multidimensional scaling (MDS) is described in the example herein there are alternative ways to estimate the microphone locations, such as nonnegative matrix factorization instead of the MDS approach described here.

In some embodiments the model dimension (parameter) estimator 510 comprises a directive sound source detector 511 which is configured to obtain the microphone location estimator 500 output and source location information or captured audio and generate the parameters related to the apparatus/device shape.

For example, after the operation of estimating microphone locations has been performed, this information can then be used to determine an estimation of sound source directions. Thus the model calibration process can be configured to keep recording audio and when the calibration process detects that there is a good directive sound source to save that part of recording to be used for the estimation of device shape.

The model dimension (parameter) estimator 510 comprises a model parameter determiner 513 which is configured to use (a plurality of) recordings with directive sound sources to measure the differences in the spectrum in microphones based on direction. This information can then be used to select model parameters that best explain the effect on the spectrum for sound sources in each direction.

In some embodiments a large amount of data from different directions enables the parameter estimation/calibration process to be optimal, but using some assumptions, like the simplified parametric model such as shown in Figure 4 enables even a small amount of recordings to produce an acceptable quality of parameter estimation.

In some embodiments the calibration process can be iterative on the highest level. For example after both the microphone location estimator 500 and the model dimension estimator 510 have generated suitable parameters then they can be configured to use the produced estimates to further improve the microphone location estimation which in turn can be used to produce better estimation of device shape and so on.

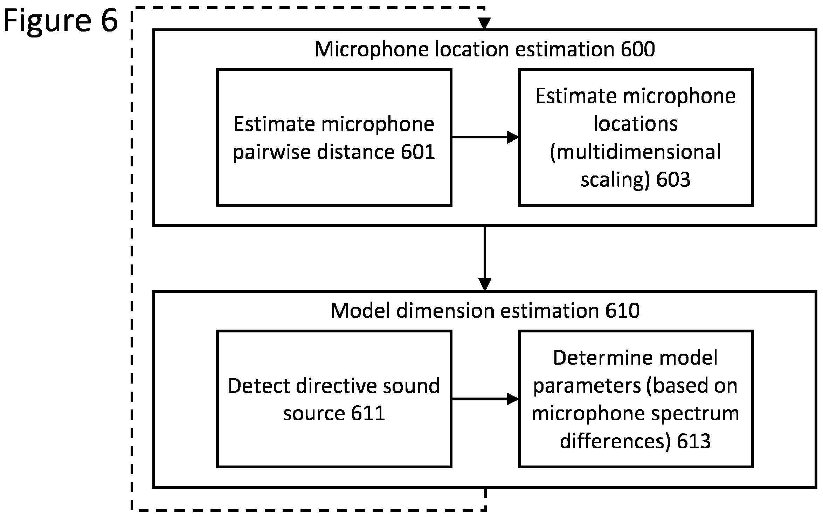

For example Figure 6 shows a flow diagram of the operations of the example parametric model calibrator/generator 211 as shown in Figure 5 in further detail.

In this example the iterative process between the microphone location estimation operation as shown in Figure 6 by step 600 and the model dimension estimation operation as shown in Figure 6 by step 610 by the dashed line looping back from the model dimension estimation step to the microphone location estimation operation.

As shown in Figure 6 the microphone location estimation operation comprises the sub-operations of estimating the microphone pairwise distances as shown by step 601 and the estimating microphone locations (by multidimensional scaling) as shown by step 603.

Furthermore the operation of model dimension estimation comprises the sub-operations of detecting directive sound sources as shown by step 611 and determining model parameters based on microphone spectrum differences by step 613.

In some embodiments when the device parameter model parameters are determined/selected or otherwise determined the apparatus microphone direction-dependent impulse responses can be simulated. These impulse responses describe the effect of the device shape and microphone placement on a received sound or acoustic wave.

The number of impulse responses can define the accuracy of the simulation. For example calculating impulse responses for each direction with 1 degree separation in both horizontal and vertical direction produce a large amount of data.

In some embodiments this impulse response simulation can be implemented using grid-based physical models. These grid based models can employ Finite or Bound Element Models (FEM, BEM). The simulation or computation can be also implemented with simplified ray-tracing based methods, which are enough to produce delays between microphones and some approximation of the effect of device geometry to a captured audio signal spectrum.

In some embodiments a simulated training dataset can then be produced by using the simulated device impulse responses and pre-recorded audio material to create virtual recordings that reproduce different usage scenarios as if they were recorded using the actual device.

In some embodiments training use cases can be first defined by hand or with scripts to produce definitions that include positions and trajectories of point sound sources around the virtual device. The use cases can optionally also define background noise sources or room acoustics.

The simulation data can be generated (for example in the simplest case) by convolving a defined monophonic sound recording with the simulated device response that corresponds to the direction of the sound source. In some embodiments the generation is implemented for all apparatus/device microphones with their corresponding impulse responses. This is configured to produce a multichannel recording that simulates the sound that would be captured with the real device.

In some embodiments the model training step can be configured to employ the produced audio recordings as input for the training process and the scene description metadata as input for the calculation of the training loss that controls the learning process.

In some embodiments the model calibration operations (or at least the recording part) is implemented on the apparatus. However in some embodiments some of the above operations can be separated from the apparatus and implemented remotely on a separate physical apparatus (for example be implemented in the 'cloud' or on remote servers). For example some of the operations can be too processor intensive or use too much battery or require too much storage space to be implemented on a portable or mobile device. In some embodiments the Training dataset simulation and ML Model re-training are such operations.

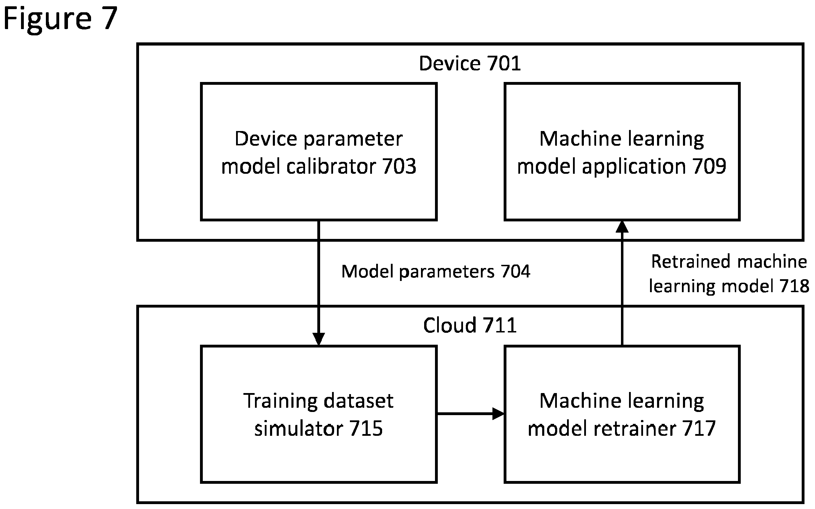

Figure 7 for example shows an example system implementing a separation of operations between apparatus/device and cloud.

In this division, the apparatus/device 701 comprises a device parameter model calibrator 703 configured to process the recordings which are captured by the apparatus/device and the iterative calibration process controls when there is no longer need to record audio. Furthermore transferring audio from device to cloud could be viewed as a security issue and can be avoided when the calibration is done entirely on the device.

When the parameter model calibration has been done, only the model parameters 704 are transferred to the cloud 711. This is convenient because the models (and model parameters 704) do not contain any user-specific sensitive data and also the amount of data transferred would be relatively small.

The cloud 711 then further comprises a training dataset simulator 715 configured to implement the simulation training dataset generation. The simulation of the training dataset can be implemented within the cloud as the operation requires significant storage space and processing power and is suited to distributed operations.

Furthermore in some embodiments the cloud comprises a machine learning (ML) model re-traininer 711 configured to implement the retraining. The output of the re-trainer in some embodiments is the obtaining, determining or capturing of a machine learning model. The retraining is implemented in the cloud as it also requires significant computing resources (and possibly specialized hardware).

An application of distributed processing/cloud processing for such processes (where these are available) enables the model training related tasks to be implemented more quickly than on the mobile device/apparatus, which provides a better user experience.

When the re-trained model data 718 is available, it can be transferred to the apparatus/device 701. The size of the model 718 is small compared to simulated training dataset that was required for the training. As such the transfer can be implemented easily.

The apparatus/device 701 can then be configured to apply the model 718 parameters as shown in Figure 7 within a suitable machine learning model application 709 such as source direction estimation/tracking.

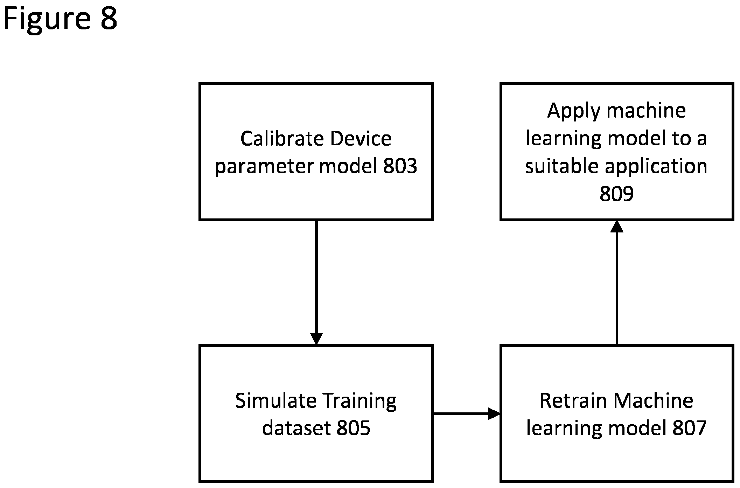

With respect to Figure 8 is shown a summary of the operations as described being implemented within the system as shown in Figure 7 (and more generally within any suitable system).

Thus for example the method comprises calibrating an apparatus/device parameter model as shown in Figure 8 by step 803.

Having generated the apparatus/device parameter model these can be used to simulate a training dataset as shown in Figure 8 by step 805.

The training dataset can then be used to retrain a machine learning model as shown in Figure 8 by step 807.

Then having retained the machine learning model parameters these can be applied to a suitable parameter model based application as shown in Figure 8 by step 809.

It is understood that the embodiments can be applied to any suitable apparatus or device that has multiple microphones. For example the apparatus or device can comprise mobile phones, cameras, personal voice assistants. Mobile phones, are especially a good candidate because there are so many models which make the automatic operation of the embodiments as described above particularly suitable.

Furthermore professional and hobbyist recording equipment can implement the embodiments described herein. Any array of off-the-shelf microphones can be used and the embodiments described herein be configured to adapt to this selection or configuration of apparatus.

Although the application of the parameter model discussed above is one of audio or sound source direction estimation and tracking, any other suitable multimicrophone audio capture applications such as spatial audio capture or source separation can be implemented or benefit from the application of the embodiments as discussed herein.

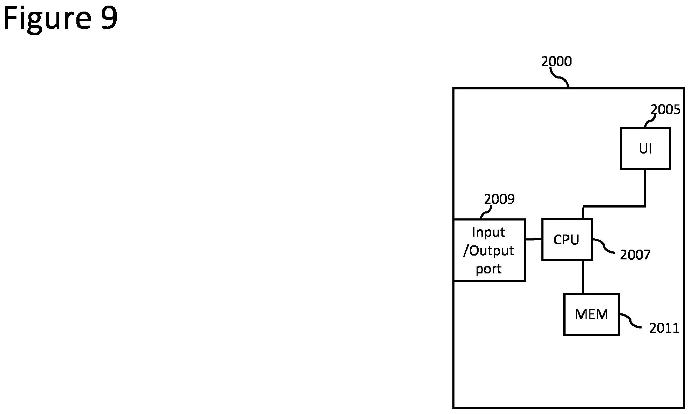

With respect to Figure 9 an example electronic device which may be used as any of the apparatus parts of the system as described above. The device may be any suitable electronics device or apparatus. For example in some embodiments the device 2000 is a mobile device, user equipment, tablet computer, computer, audio playback apparatus, etc. The device may for example be configured to implement the encoder or the renderer or any functional block as described above.

In some embodiments the device 2000 comprises at least one processor or central processing unit 2007. The processor 2007 can be configured to execute various program codes such as the methods such as described herein.

In some embodiments the device 2000 comprises a memory 2011. In some embodiments the at least one processor 2007 is coupled to the memory 2011. The memory 2011 can be any suitable storage means. In some embodiments the memory 2011 comprises a program code section for storing program codes implementable upon the processor 2007. Furthermore in some embodiments the memory 2011 can further comprise a stored data section for storing data, for example data that has been processed or to be processed in accordance with the embodiments as described herein. The implemented program code stored within the program code section and the data stored within the stored data section can be retrieved by the processor 2007 whenever needed via the memory-processor coupling.

In some embodiments the device 2000 comprises a user interface 2005. The user interface 2005 can be coupled in some embodiments to the processor 2007. In some embodiments the processor 2007 can control the operation of the user interface 2005 and receive inputs from the user interface 2005. In some embodiments the user interface 2005 can enable a user to input commands to the device 2000, for example via a keypad. In some embodiments the user interface 2005 can enable the user to obtain information from the device 2000. For example the user interface 2005 may comprise a display configured to display information from the device 2000 to the user. The user interface 2005 can in some embodiments comprise a touch screen or touch interface capable of both enabling information to be entered to the device 2000 and further displaying information to the user of the device 2000. In some embodiments the user interface 2005 may be the user interface for communicating.

In some embodiments the device 2000 comprises an input/output port 2009. The input/output port 2009 in some embodiments comprises a transceiver. The transceiver in such embodiments can be coupled to the processor 2007 and configured to enable a communication with other apparatus or electronic devices, for example via a wireless communications network. The transceiver or any suitable transceiver or transmitter and/or receiver means can in some embodiments be configured to communicate with other electronic devices or apparatus via a wire or wired coupling.

The transceiver can communicate with further apparatus by any suitable known communications protocol. For example in some embodiments the transceiver can use a suitable universal mobile telecommunications system (UMTS) protocol, a wireless local area network (WLAN) protocol such as for example IEEE 802.X, a suitable short-range radio frequency communication protocol such as Bluetooth, or infrared data communication pathway (IRDA).

The input/output port 2009 may be configured to receive the signals.

In some embodiments the device 2000 may be employed as at least part of the renderer. The input/output port 2009 may be coupled to headphones (which may be a headtracked or a non-tracked headphones) or similar.

In general, the various embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general-purpose computers, special purpose computers, microprocessors, digital signal processors (DSPs), application specific integrated circuits (ASIC), gate level circuits and processors based on multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

## Claims

1. An apparatus comprising means configured to:
determine at least one parameter in relation to microphone acoustics of the apparatus;
obtain a machine learning model, wherein the machine learning model is trained with generated input data at least based on the at least one parameter; and
process at least one audio signal in relation to the microphone acoustics using the obtained machine learning model.

2. The apparatus as claimed in claim 1, wherein the means configured to determine the at least one parameter is configured to:
passively obtain the at least one parameter from at least two microphones located on the apparatus at least two audio signals; and
determine the at least one parameter in relation to microphone acoustics of the apparatus based on processing the at least two audio signals.

3. The apparatus as claimed in claim 2, wherein the means configured to determine the at least one parameter based on processing the at least two audio signals is configured to determine at least one of:
at least one microphone location with respect to a locus on the apparatus;
at least one dimension of the apparatus;
a geometry of the apparatus;
at least one microphone orientation with respect to the apparatus; and
at least one material acoustic property of the apparatus.

4. The apparatus as claimed in any of claims 2 or 3, wherein the means configured to determine the at least one parameter based on processing the at least two audio signals is configured to:
determine distance estimates between pairs of the at least two microphones; and
determine microphone location estimates based on the determined distance estimates between pairs of the at least two microphones.

5. The apparatus as claimed in claim 4, wherein the means configured to determine the at least one parameter based on processing the at least two audio signals is further configured to:
determine at least one sound source and a direction associated with the at least one sound source; and
determine based on microphone audio signal spectrum difference at least one at least one acoustic characteristic parameter associated with the apparatus.

6. The apparatus as claimed in any of claims 1 to 5, wherein the machine learning model is trained with the generated input data at least based on the at least one parameter is configured to:
simulate a training dataset based on the at least one parameter of the apparatus; and
train the machine learning model with the training dataset.

7. The apparatus as claimed in any of claims 1 to 5, wherein the machine learning model is trained with the generated input data at least based on the at least one parameter is configured to:
output the at least one parameter to a further apparatus, wherein the further apparatus is configured to simulate a training dataset based on the at least one parameter;
apply the training dataset to the machine learning model; and
receive from the further apparatus a machine learning model output.

8. The apparatus as claimed in any of the claims 1 to 7, wherein the means configured to process at least one audio signal in relation to the microphone acoustics using the obtained machine learning model is configured to determine at least one of:
at least one sound source direction by processing at least one audio signal captured by the apparatus using the machine learning model;
at least one sound source location by processing at least one audio signal captured by the apparatus using the machine learning model;
at least one tracked sound source direction by processing at least one audio signal captured by the apparatus using the machine learning model; and
at least one tracked sound source position by processing at least one audio signal captured by the apparatus using the machine learning model.

9. The apparatus as claimed in any of the claims 1 to 8, wherein the means are further configured to process at least one audio signal captured by the apparatus based on the at least one parameter of the apparatus while waiting for the machine learning model.

10. An apparatus comprising means configured to:
obtain at least one parameter in relation to microphone acoustics of a further apparatus;
obtain a machine learning model, wherein the machine learning model is trained with generated input data at least based on the at least one parameter; and
output the determined machine learning model to the further apparatus to process at least one audio signal in relation to the microphone acoustics using the obtained machine learning model.

11. The apparatus as claimed in claim 10, wherein the at least one parameter is at least one of:
at least one microphone location with respect to a locus on the further apparatus;
at least one dimension of the further apparatus;
a geometry of the further apparatus;
at least one microphone orientation with respect to the further apparatus; and
at least one material acoustic property of the further apparatus.

12. The apparatus as claimed in any of claims 10 or 11, wherein the machine learning model is trained with generated input data at least based on the at least one parameter is configured to:
simulate a training dataset based on the at least one parameter in relation to microphone acoustics of the further apparatus; and
generate the machine learning model based on the training dataset.

13. A method for an apparatus, the method comprising:
determining at least one parameter in relation to microphone acoustics of the apparatus;
obtaining a machine learning model, wherein the machine learning model is trained with generated input data at least based on the at least one parameter; and
processing at least one audio signal in relation to the microphone acoustics using the obtained machine learning model.

14. The method as claimed in claim 13, wherein determining the at least one parameter comprises:
passively obtaining the at least one parameter from at least two microphones located on the apparatus at least two audio signals; and
determining the at least one parameter based on processing the at least two audio signals.

15. A method for an apparatus, the method comprising:
obtaining at least one parameter in relation to microphone acoustics of a further apparatus;
obtaining a machine learning model, wherein the machine learning model is trained with generated input data at least based on the at least one parameter; and
outputting the determined machine learning model to the further apparatus to process at least one audio signal in relation to the microphone acoustics using the obtained machine learning model.
